# EUROPÄISCHE PATENTANMELDUNG

(11) **EP 4 737 646 A1**
(43) Veröffentlichungstag der Anmeldung: **06.05.2026**
(21) Anmeldenummer: 24210765.4
(22) Anmeldetag: 05.11.2024
(51) Int. Cl.: E02D 17/13, E02F 3/20, E02F 5/08

(54) **BAUMASCHINE UND VERFAHREN ZUM STEUERN EINER BAUMASCHINE**

(71) Anmelder: BAUER Maschinen GmbH, 86529 Schrobenhausen (DE)
(72) Erfinder: Hugl, Andreas, 86666 Burgheim (DE); Schuell, Andreas, 85302 Gerolsbach (DE)
(74) Vertreter: Wunderlich & Heim Patentanwälte PartG mbB

(57) **Zusammenfassung**

Die Erfindung betrifft Baumaschine (10), an der ein Bodenbearbeitungswerkzeug (30) in der Form eines Hydraulik- oder Seilgreifers (31) angebracht oder anzubringen ist, mit einer Betätigungseinrichtung für das an der Baumaschine (10) angebrachte oder anzubringende Bodenbearbeitungswerkzeug (30), mit der das Bodenbearbeitungswerkzeug (30) in einen zu bearbeitenden Boden eingebracht werden kann, und mit einer Steuereinrichtung zur Ansteuerung der Betätigungseinrichtung, wobei die Steuereinrichtung eingerichtet ist, um einen Bearbeitungsvorgang über eine Anwendung mehrerer Maschinenparameter bei der Betätigungseinrichtung zu steuern. In der Steuereinrichtung sind mehrere Vorgabe-Datensätze gespeichert, die jeweils eine vorgegebene/vordefinierte Auswahl der Maschinenparameter der Betätigungseinrichtung für unterschiedliche definierte Bearbeitungsvorgänge enthalten. Jeder der Vorgabe-Datensätze ist einer bestimmten Bodenart, die sich von anderen Bodenarten durch eine Bodenmaterialzusammensetzung, insbesondere hinsichtlich ihrer physikalischen Eigenschaften, unterscheidet, oder einer bestimmten Betriebsart, die sich von anderen Betriebsarten beispielsweise hinsichtlich einer Arbeitsgeschwindigkeit oder eines Verschleißes unterscheidet, zugeordnet. Eine Auswahleinrichtung ist vorgesehen, mit welcher die Vorgabe-Datensätze zum Betrieb der Baumaschine (10) auswählbar sind. Die Erfindung betrifft auch ein entsprechendes Verfahren zum Steuern einer Baumaschine (10), an der ein Bodenbearbeitungswerkzeug (30), insbesondere in der Form eines Hydraulik- oder Seilgreifers (31) angebracht ist.

## Beschreibung

Die Erfindung betrifft eine Baumaschine, an der ein Bodenbearbeitungswerkzeug in der Form eines Hydraulik- oder Seilgreifers angebracht oder anzubringen ist, sowie ein Verfahren zum Steuern einer solchen Baumaschine.

Bei der Ausführung von Tiefbau- oder anderen Aushubarbeiten, beispielsweise zur Erstellung von Gründungselementen, etwa von Gründungspfählen oder Schlitzwänden, ist die konkrete Steuerung einer zur Ausführung verwendeten Baumaschine, an der ein Bodenbearbeitungswerkzeug, insbesondere in der Form eines Hydraulik- oder Seilgreifers angebracht oder anzubringen ist, davon abhängig, wie die Geologie des Baugrunds beschaffen ist.

Daher wird, jedenfalls bei größeren Bauvorhaben, üblicherweise ein Bodenprofil für den jeweils vorgefundenen Baugrund erstellt. Das Bodenprofil gibt dabei an, welchen Aufbau, insbesondere Schichtaufbau von unterschiedlichen Bodenarten, die sich von anderen Bodenarten durch eine Bodenmaterialzusammensetzung, insbesondere hinsichtlich ihrer physikalischen Eigenschaften, unterscheiden, der Baugrund aufweist. Die Erstellung eines Bodenprofils erfolgt beispielsweise durch Probebohrungen, um anhand der gewonnenen Bohrkerne zu ermitteln, mit welchem Bodenprofil der Baugrund aufgebaut ist.

Eine Kenntnis des Bodenprofils des Baugrundes ist aus wirtschaftlicher Sicht wesentlich, da durch den Aufbau des Bodens bestimmt wird, wie aufwändig der Bodenaushub ist. So ist beispielsweise das Ausheben bei einem Baugrund mit einem großen Anteil an Felsmaterial aufgrund des geringeren Vortriebs und des höheren Werkzeugverschleißes aufwändiger als bei einem Baugrund mit Sand-, Kies- und/oder Tonschichten.

Abhängig von der Geologie des Baugrunds kann jedoch ein Bodenprofil selbst in einem örtlich begrenzten Bereich stark schwanken. Üblicherweise bestehen diese Schwankungen darin, dass Dickenänderungen der einzelnen Bodenschichten auftreten und sich gegebenenfalls auch ein Felshorizont ändert.

In dieser Erfindung wird davon ausgegangen, dass sich mit unterschiedlichen Bodenschichten die physikalischen Eigenschaften wie z. B. Härte, Dichte, rollig, bindig usw. des Bodens ändert. Dies hat zur optimalen Bearbeitung der entsprechenden Bodenschicht zur Folge, dass gewisse zur Bearbeitung einer Bauaufgabe bei einer Baumaschine anzuwendende Maschinenparameter anzupassen und geeignete Werte auszuwählen sind.

Diese Anpassungen werden bisher manuell für jeden einzelnen Parameter durchgeführt. Dies ist aufgrund der vielfältigen Einstellmöglichkeiten der Betätigungseinrichtung für das an der Baumaschine angebrachte oder anzubringende Bodenbearbeitungswerkzeug, mit der das Bodenbearbeitungswerkzeug in einen zu bearbeitenden Boden eingebracht werden kann, zeitaufwendig und setzt ein entsprechendes Fachwissen und große Erfahrung des Bedienpersonals voraus, um die bestmöglichen Anpassungen vornehmen zu können.

Zwar gibt es bei Baumaschinensteuerungen Assistenzsysteme, die den Gerätefahrer entlasten, indem monotone oder sich wiederholende Bedienungen durch ein Programm mit vordefinierten Schritten automatisiert werden und schnellere Regelungs- und Steuerungsprozesse ermöglichen, allerdings können bestimmte Bearbeitungsprozesse nicht vollständig automatisiert werden und verlangen immer noch Entscheidungen durch den Gerätefahrer.

Dies betrifft insbesondere Greifer-Assistenten (für Hydraulik- bzw. Seilgreifer). Hier kann es von Nöten sein, für die einzelnen Bodenschichten unterschiedliche Parameter auszuwählen bzw. anzuwenden. Solche Maschinenparameter, die von einer Steuereinrichtung der Baumaschine zur Ansteuerung der Betätigungseinrichtung angewandt werden, um einen Bearbeitungsvorgang bei der Betätigungseinrichtung zu steuern, umfassen bei Bodenbearbeitungswerkzeugen wie Hydraulik- bzw. Seilgreifern, welche konkret ein Bohrgreifer, Schlitzwandgreifer oder Pfahlgreifer sein können, beispielsweise eine Fallhöhe des Bodenbearbeitungswerkzeugs, einen Schließzyklus von Greiferschalen, eine Schließkraft von Greiferschalen, eine Schließgeschwindigkeit von Greiferschalen, einen Füllgrad von Greiferschalen, eine Anzahl von Wiederholungen von Schließzyklen oder Fallvorgängen.

Der Erfindung liegt die **Aufgabe** zugrunde, eine Baumaschine, an der ein Bodenbearbeitungswerkzeug in der Form eines Hydraulik- oder Seilgreifers angebracht oder anzubringen ist, sowie ein Verfahren zum Steuern einer solchen Baumaschine anzugeben, mit welchen die Komplexität der Auswahl und Anpassung der Bearbeitungsparameter reduziert ist und eine höhere Effizienz der Bearbeitung erreicht werden kann.

Diese Aufgabe wird nach der Erfindung zum einen durch eine Baumaschine mit den Merkmalen des Anspruchs 1 und zum anderen durch ein Verfahren mit den Merkmalen des Anspruchs 10 gelöst. Bevorzugte Ausführungsformen der Erfindung sind in den jeweiligen abhängigen Ansprüchen angegeben.

Die erfindungsgemäße Baumaschine, an der ein Bodenbearbeitungswerkzeug, insbesondere in der Form eines Hydraulik- oder Seilgreifers, angebracht oder anzubringen ist, und die eine Betätigungseinrichtung für das an der Baumaschine angebrachte oder anzubringende Bodenbearbeitungswerkzeug, mit der das Bodenbearbeitungswerkzeug in einen zu bearbeitenden Boden eingebracht werden kann, und eine Steuereinrichtung zur Ansteuerung der Betätigungseinrichtung aufweist, wobei die Steuereinrichtung eingerichtet ist, um einen Bearbeitungsvorgang über eine Anwendung mehrerer Maschinenparameter bei der Betätigungseinrichtung zu steuern, ist demnach dadurch **gekennzeichnet**, dass in der Steuereinrichtung mehrere Vorgabe-Datensätze gespeichert sind, die jeweils eine vorgegebene/vordefinierte Auswahl der Maschinenparameter der Betätigungseinrichtung für unterschiedliche definierte Bearbeitungsvorgänge enthalten, dass jeder der Vorgabe-Datensätze einer bestimmten Bodenart, die sich von anderen Bodenarten durch eine Bodenmaterialzusammensetzung, insbesondere hinsichtlich ihrer physikalischen Eigenschaften, unterscheidet, oder einer bestimmten Betriebsart, die sich von anderen Betriebsarten beispielsweise hinsichtlich einer Arbeitsgeschwindigkeit oder eines Verschleißes unterscheidet, zugeordnet ist, und dass eine Auswahleinrichtung vorgesehen ist, mit welcher die Vorgabe-Datensätze zum Betrieb der Baumaschine auswählbar sind.

Das erfindungsgemäße Verfahren zum Steuern einer Baumaschine, an der ein Bodenbearbeitungswerkzeug, insbesondere in der Form eines Hydraulik- oder Seilgreifers angebracht ist, und die eine Betätigungseinrichtung für das an der Baumaschine angebrachte Bodenbearbeitungswerkzeug aufweist, mit der das Bodenbearbeitungswerkzeug in einen zu bearbeitenden Boden eingebracht werden kann, umfasst den Schritt eines Betreibens der Betätigungseinrichtung, indem diese durch Anwenden mehrerer Maschinenparameter bei der Betätigungseinrichtung gesteuert wird, und ist dadurch **gekennzeichnet**, dass die Steuerung der Betätigungseinrichtung durch Auswahl und Anwendung eines Vorgabe-Datensatzes aus mehreren gespeicherten Vorgabe-Datensätzen erfolgt, die jeweils eine vorgegebene/vordefinierte Auswahl der Maschinenparameter der Betätigungseinrichtung für unterschiedliche definierte Bearbeitungsvorgänge enthalten, und dass jeder der Vorgabe-Datensätze einer bestimmten Bodenart, die sich von anderen Bodenarten durch eine Bodenmaterialzusammensetzung, insbesondere hinsichtlich ihrer physikalischen Eigenschaften, unterscheidet, oder einer bestimmten Betriebsart, die sich von anderen Betriebsarten beispielsweise hinsichtlich einer Arbeitsgeschwindigkeit oder eines Verschleißes unterscheidet, zugeordnet ist.

Eine Grundidee der Erfindung liegt sehr verallgemeinert darin, Maschinenparameter bodenschichtabhängig oder betriebsartabhängig einstellbar zu machen.

Konkreter liegt der Erfindung das Konzept zugrunde, dass mehrere Maschinenparameter der Betätigungseinrichtung eines Bodenbearbeitungswerkzeugs für unterschiedliche definierte Bearbeitungsvorgänge jeweils zu Preset in der Form von Vorgabe-Datensätzen zusammengefasst werden. Diese Presets bzw. Vorgabe-Datensätze sind jeweils einer bestimmten Bodenart, die sich von anderen Bodenarten durch eine Bodenmaterialzusammensetzung, insbesondere hinsichtlich ihrer physikalischen Eigenschaften, unterscheidet, oder einer bestimmten Betriebsart, die sich von anderen Betriebsarten beispielsweise hinsichtlich einer höheren oder geringeren Arbeitsgeschwindigkeit bzw. Produktivität oder eines damit einhergehenden höheren oder niedrigeren Verschleißes unterscheidet, zugeordnet ist, und berücksichtigen die dafür notwendigen Anpassungen der Maschinenparameter, um eine möglichst effiziente Bearbeitung zu erreichen.

Die Anwendung der für eine Bodenart oder Betriebsart geeigneten Maschinenparameter erfolgt sehr einfach und schnell allein durch die Auswahl und Anwendung des passenden Vorgabe-Datensatzes. Selbst eine Änderung der Geologie des Baugrunds bei einem Bearbeitungsvorgang in einem Bodenprofil mit unterschiedlichen Bodenschichten kann einfach und schnell durch Auswahl und Anwendung eines anderen, zu einer anderen Bodenschicht besser passenden Vorgabe-Datensatzes berücksichtigt werden, wobei das Bedienpersonal zum einen von der aufwendigen und zeitraubenden Arbeit einer manuellen Anpassung der zahlreichen Maschinenparameter bei einer Änderung der Bodenschicht entlastet ist, und zum anderen auch nicht über die speziellen Fachkenntnisse und Erfahrungen über die Eignung bestimmter Werte in einer gegebenen Situation verfügen muss.

Die einzelnen Maschinenparameter können entweder vom Bedienpersonal festgelegt werden oder es können vordefinierte Vorgabewerte (vom Maschinenhersteller oder von früheren Bearbeitungsvorgängen) in der Form der Vorgabe-Datensätze verwendet werden. Hierbei ist es also auch möglich, dass erfahrenes Bedienpersonal die Maschinenparameter unerfahrenem Bedienpersonal zur Verfügung stellt. Dies ermöglicht auch unerfahrenem Bedienpersonal, die situationsabhängig optimierten Maschinenparameter für die Bearbeitung der jeweiligen Bodenschicht anwenden zu können und somit ihre Effizienz und Qualität des Arbeitsprozesses zu verbessern und Verschleiß der Baumaschine und der Bodenbearbeitungswerkzeuge durch unsachgemäße Einstellungen zu vermeiden.

Die Vorgabe einer Sequenz von Vorgabe-Datensätzen kann beispielsweise entsprechend einem zuvor ermittelten (bekannten) Bodenprofil analog zu den im Bodenprofil ermittelten aufeinanderfolgenden Bodenschichten unterschiedlicher Bodenarten erfolgen. Das Bearbeiten der aufeinanderfolgenden Bodenschichten unterschiedlicher Bodenarten kann dann durch Durchschalten der einzelnen Vorgabe-Datensätze in der Sequenz entweder manuell oder automatisiert aufgrund der bereits abgeteuften Tiefe geschehen. In einer bevorzugten weiter automatisierten Variante kann das Durchschalten auch aufgrund aufgenommener Messwerte beim Bearbeitungsprozess wie Schließkräfte erfolgen.

Vorzugsweise ist dafür erfindungsgemäß eine Sequenz der Anwendung der Vorgabe-Datensätze vordefinierbar/vorgebbar oder vordefiniert/vorgegeben und die Sequenz der Anwendung der Vorgabe-Datensätze kann über eine Tiefe des Bodenbearbeitungswerkzeugs im Boden vordefinierbar/vorgebbar oder vordefiniert/vorgegeben sein.

Durch Ausgestaltung der Steuereinrichtung der Baumaschine kann diese eingerichtet sein, um die Vorgabe der Sequenz der Anwendung der Vorgabe-Datensätze auf der Grundlage eines vorab erstellten Bodenprofils zu bestimmen. Eine solche Vorgabe kann dann vor Ort bei Bedarf durch das Bedienpersonal noch angepasst werden, stellt aber bereits eine weitgehend optimierte Voreinstellung der Steuerung für einen konkreten Bearbeitungsvorgang dar.

In einer besonders benutzerfreundlichen und intuitiven Ausgestaltung können die Vorgabe-Datensätze über ein GUI ("graphical user interface") selektiv von einem Maschinenbediener auswählbar und/oder neu erstellbar sein, wobei die Maschinenparameter eines jeweiligen ausgewählten Datensatzes von dem Maschinenbediener über das GUI veränderbar und speicherbar sind. Eine solche menügestütze Eingabe kann die Abfolge der Bodenartenschichten und die dazu aus dem jeweils passenden Vorgabe-Datensatz vorgegeben Maschinenparameter übersichtlich darstellen.

Die Steuereinrichtung kann dann ferner eingerichtet sein, um die Anwendung der Vorgabe-Datensätze durch eine Eingabe einer jeweiligen Schichtdicke der dem jeweiligen Vorgabe-Datensatz zugeordneten Bodenart vorzunehmen bzw. einzustellen. Ferner kann die Steuereinrichtung eingerichtet sein, um die Anwendung eines aktuellen Vorgabe-Datensatzes bzw. der durch diesen Vorgabe-Datensatz definierten Maschinenparameter in Abhängigkeit von einer Erfassung einer Eindringtiefe des Bodenbearbeitungswerkzeugs oder einer Erfassung von Kraftverläufen am Bearbeitungswerkzeug zu beenden. Letztere können nämlich als Indiz für eine Änderung der Bodenart in einer Bodenschicht während des laufenden Bearbeitungsvorgangs (z. B. dem Aushub eines Schlitzes) dienen, die eine Anwendung eines anderen Vorgabe-Datensatzes mit geänderten Maschinenparametern für die andere Bodenart erforderlich oder zumindest vorteilhaft und effizienter macht.

In einer weiter automatisierten Ausgestaltung kann für die Situation der Änderung der Bodenart während eines Bearbeitungsvorgangs in einer bestimmten Tiefe die Steuereinrichtung eingerichtet sein, um die Auswahl und Anwendung der Vorgabe-Datensätze automatisch nach Maßgabe von Messdaten von Bearbeitungsparametern, insbesondere von einer Eindringtiefe des Bodenbearbeitungswerkzeugs in den Boden und/oder einem am Bodenbearbeitungswerkzeug erfassten Kraftverlauf, vorzunehmen.

Für diesen Aspekt ist es insbesondere nützlich und kann im Rahmen der Erfindung einbezogen werden, dass Hydraulikgreifer, aber auch andere Bodenbearbeitungswerkzeuge und deren Betätigungseinrichtungen tendenziell mit immer mehr Sensoren und die Steuerungen der Baumaschinen mit Automatik-Routinen für bestimmte Situationen ausgestattet werden.

Die EP 3 725 950 A1 beschreibt beispielsweise, dass über die Messung von Druck in den Schließzylindern und Schließwinkel der Greiferschaufeln oder -schalen eines Hydraulikgreifers Rückschlüsse auf evtl. zwischen den Schaufeln befindliche Findlinge gezogen werden können, z. B. über Größe und Lage. Über eine Automatik kann weiter der Greifer wieder geöffnet, ausreichend angehoben und wieder fallengelassen werden, um den Findling zu zertrümmern. Auch eine solche Automatik-Routine kann in einem Vorgabe-Datensatz (für einen Bodenart, bei der solche Findlinge erwartet werden können) als Maschinenparameter hinterlegt werden.

Die EP 3 725 951 A1 beschreibt beispielsweise, dass aus einer Eindringtiefe der Schaufeln bzw. Schalen und/oder einem Gewicht des angehobenen Greifers Rückschlüsse auf den Füllgrad der Schaufel gezogen werden können, so dass der Greifer bei unzureichendem Füllungsgrad automatisch wieder geöffnet, ggf. weiter angehoben und erneut fallengelassen werden kann, um einen höheren Füllgrad zu erreichen. Damit werden unnötige Bewegungen des Greifers aus dem Schlitz vermieden. Auch eine solche Automatik-Routine kann im Übrigen in einem Vorgabe-Datensatz (für eine Bodenart, bei der die Wahrscheinlichkeit unzureichender Füllung besteht) als Maschinenparameter hinterlegt werden.

Konkret können daher die fallweise vorhandenen Messwerte bzw. erfassten Betriebsgrößen nicht nur für die Steuerung einer Automatik-Routine innerhalb eines angewandten Vorgabe-Datensatzes genutzt werden, sondern können auch ausgewertet werden, um den Wechsel eines Vorgabe-Datensatzes innerhalb eines Bearbeitungsvorgangs entsprechend einer geplanten Sequenz zu veranlassen oder einen Stopp auszulösen, um eine Reaktion eines Bedienpersonals (z. B. die manuelle Anwendung eines anderen Vorgabe-Datensatzes) abzufragen.

Die entsprechenden Messwerte und Betriebsgrößen können durch geeignete Erfassungseinrichtungen an der Baumaschine oder an dem Bodenbearbeitungswerkzeug erfasst werden. Die Erfassungseinrichtungen können insbesondere Sensoren sein, welche die jeweilige Betriebsgröße, etwa eine Drehzahl oder ein Drehmoment, unmittelbar erfassen. Die Erfassungseinrichtungen können jedoch auch indirekt arbeiten, wobei etwa über die Leistungsaufnahme eines hydraulischen Drehantriebes ein Drehmoment errechnet und bestimmt werden kann. Die Erfassungseinrichtungen können über eine Draht- oder Funkverbindung mit der Steuer- und Auswerteeinrichtung verbunden sein. Die Steuer- und Auswerteeinrichtung kann sich dabei unmittelbar an der Baumaschine selbst oder in einer entfernten Zentrale befinden, welche dann über eine entsprechende Verbindung mit der Baumaschine in Datenverbindung steht.

Das mit der erfindungsgemäßen Baumaschine bzw. dem erfindungsgemäßen Verfahren eingesetzte Bodenbearbeitungswerkzeug kann ein Hydraulik- oder Seilgreifer, insbesondere ein Bohrgreifer, Schlitzwandgreifer oder Pfahlgreifer sein. Bei diesen Werkzeugen ist die Anzahl der einstellbaren Maschinenparameter und die Auswirkung auf den Bearbeitungsfortschritt bzw. die -effizienz besonders groß.

Die Vorgabe-Datensätze können - in Abhängigkeit des jeweiligen Bearbeitungswerkzeugs und der erwarteten Bodengeologie - mindestens zwei Maschinenparameter ausgewählt aus den Folgenden umfassen: eine Fallhöhe des Bodenbearbeitungswerkzeugs, einen Schließzyklus von Greiferschalen, eine Schließkraft von Greiferschalen, eine Schließgeschwindigkeit von Greiferschalen, einen Füllgrad von Greiferschalen, eine Anzahl von Wiederholungen von Schließzyklen oder Fallvorgängen bei einem Greifer.

Grundsätzlich können aber auch weitere geeignete Betriebsgrößen bzw. Messwerte oder Maschinenparameter in das erfindungsgemäße Konzept der funktionalen Erweiterung der Steuerungseinrichtung über Vorgabe-Datensätze einbezogen werden. Besonders aussagekräftig können Betriebsgrößen oder Maschinenparameter sein, die ausgewählt werden aus Drehmoment, Seilkräften, Drehzahl, Leistung, Vorschubkraft, Vorschubgeschwindigkeit, Beschleunigung, Energieeintrag, Schwingungen, Schall, Hydraulikdruck und/oder Hydraulikstrom. Insbesondere kann auch eine Kombination von mehreren Betriebsgrößen berücksichtigt werden, so dass durch die Steuer- und Auswerteeinrichtung mit besonders großer Sicherheit eine Aussage über die momentan bearbeitete Bodenschicht und ggf. die Sinnhaftigkeit eines Wechsels der angewendeten Maschinenparameter eines Vorgabe-Datensatzes durch einen anderen Vorgabe-Datensatz oder der Modifizierung einzelner Parameterwerte innerhalb eines aktuell angewandten Vorgabe-Datensatzes getroffen werden kann.

Die Presets bzw. Vorgabe-Datensätze mit ausgewählten Maschinenparametern, die jeweils einer bestimmten Bodenart zugeordnet sind, können in der Steuer- und Auswerteeinrichtung in einer Datenbank abgespeichert sein oder werden. Die Datenbank kann bereits bei der Auslieferung einer Baumaschine oder eines Bodenbearbeitungswerkzeugs vorgegeben sein oder im Betrieb von einer Zentrale aufgespielt oder mit neuen oder ergänzten Werten versehen und gepflegt werden. Weiterhin ist es nach einer Variante der Erfindung möglich, dass seitens des Bedienpersonals über das GUI der Steuer- und Auswerteeinrichtung bevorzugte Datensätze, das heißt bevorzugte Kombinationen von Maschinenparametern für bestimmte, an einer Baustelle vorgefundene Bodenarten als Vorgabe-Datensätze abgespeichert werden, die für diesen Bearbeitungsort oder für eine bestimmte Baumaschinenkonfiguration erstellt und ermittelt worden sind. Die Datenbank kann so ein Expertensystem darstellen, wobei auch eine automatische Verbesserung und Änderung der hinterlegten Vorgabe-Datensätze aufgrund einer bevorzugten selbstlernenden Logik der Steuer- und Auswerteeinrichtung vorgesehen sein können.

Eine Weiterbildung der Erfindung kann darin bestehen, dass durch die Steuer- und Auswerteeinrichtung im Baufortschritt ermittelte Messwerte oder Betriebsgrößen und Maschinenparameter, welche im Rahmen der Vorgabe-Datensätze für bestimmte Bodenarten abgespeichert sind, abgefragt und verglichen werden, um dadurch eine aktuelle Bodenart zu bestimmen. Erkennt beispielsweise die Steuer- und Auswerteeinrichtung durch einen Vergleich eines Messwertes eines charakteristischen Parameters mit einem Sollwert des entsprechenden Parameters, dass eine Bodenschicht mit einer anderen Festigkeit und damit ggf. mit einem oder mehreren unvorteilhaften Maschinenparameter(n) durchörtert wird, kann die Steuer- und Auswerteeinrichtung entsprechend der aktuell abgeleiteten Bodenart den Vorgabe-Datensatz der Maschinenparameter oder einzelne Maschinenparameter ändern oder dies dem Bedienpersonal beispielsweise an einem Monitor anzeigen. So kann etwa beim Feststellen einer Felsschicht die Fallhöhe des Greifers oder eine Schließkraft von Greiferschalen herabgesetzt werden, um einen übermäßigen Werkzeugverschleiß zu vermeiden und möglichst optimale Abtragsbedingungen für die Bodenschicht zu erreichen.

Soweit die Erfindung mit Bezug auf die Baumaschine beschrieben wird, bezieht sich die Beschreibung auch auf das Verfahren entsprechend. Mit dem Verfahren können die Vorteile und Wirkungen in entsprechender Weise erzielt werden.

Die Erfindung wird nachfolgend anhand eines bevorzugten Ausführungsbeispiels einer Baumaschine weiter erläutert, welche schematisch in der einzigen Zeichnung dargestellt ist.

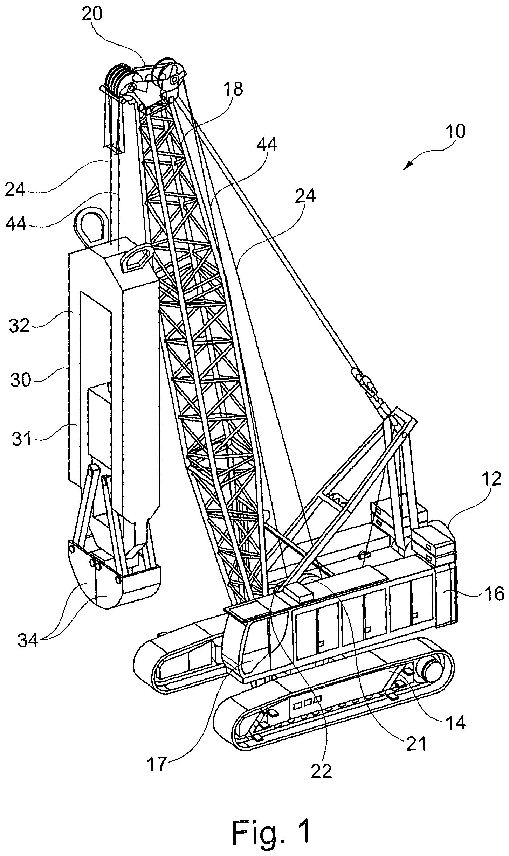

Eine erfindungsgemäße Baumaschine 10 gemäß Fig. 1 kann ein mobiles Trägergerät 12 mit einem Raupenfahrwerk als Unterwagen 14 aufweisen. Auf dem Unterwagen 14 kann drehbar um eine vertikale Drehachse ein Oberwagen 16 mit einer Bedienkabine 17 gelagert sein. Vorzugsweise innerhalb der Bedienkabine 17 befindet sich eine Steuereinrichtung einschließlich einer Eingabeeinrichtung für einen Maschinenbediener.

An dem Oberwagen 16 kann schwenkbar um eine horizontale Achse ein Auslegerarm 18 angelenkt sein. An einem Kopf 20 des Auslegerarms 18 mit Umlenkrollen kann ein Halteseil 24 geführt sein, an dessen Ende ein hier beispielhaft als Seilgreifer 31 ausgebildetes Bodenbearbeitungswerkzeug 30 mit einem Greiferrahmen 32 und unteren Greiferschaufeln 34 angehängt sein kann. Über eine erste Seilwinde 21 am Trägergerät 12 kann das Halteseil 24 zum Heben und Senken des Seilgreifers 31 betätigt werden. Weiterhin kann sich an dem Trägergerät 12 eine zweite Seilwinde 22 für ein Betätigungsseil 44 befinden, welches über den Kopf 20 ebenfalls zu dem Seilgreifer 31 zum Betätigen der Greiferschaufeln oder -schalen 34 am unteren Ende des Greiferrahmens 32 geführt sein kann.

Die Seilwinden können im Rahmen der Beschreibung als nicht abschließende Beispiele für Betätigungsvorrichtungen dienen. Die Steuereinrichtung, die auch zur Ansteuerung der Betätigungseinrichtung dient, kann in der Bedienkabine 17 und/oder extern der Baumaschine angeordnet sein.

## Patentansprüche

**1.** Baumaschine (10), an der ein Bodenbearbeitungswerkzeug (30) in der Form eines Hydraulik- oder Seilgreifers (31) angebracht oder anzubringen ist, mit einer Betätigungseinrichtung für das an der Baumaschine (10) angebrachte oder anzubringende Bodenbearbeitungswerkzeug (30), mit der das Bodenbearbeitungswerkzeug (30) in einen zu bearbeitenden Boden eingebracht werden kann, und
einer Steuereinrichtung zur Ansteuerung der Betätigungseinrichtung, wobei die Steuereinrichtung eingerichtet ist, um einen Bearbeitungsvorgang über eine Anwendung mehrerer Maschinenparameter bei der Betätigungseinrichtung zu steuern,
**dadurch gekennzeichnet,**
**dass** in der Steuereinrichtung mehrere Vorgabe-Datensätze gespeichert sind, die jeweils eine vorgegebene/vordefinierte Auswahl der Maschinenparameter der Betätigungseinrichtung für unterschiedliche definierte Bearbeitungsvorgänge enthalten,
**dass** jeder der Vorgabe-Datensätze einer bestimmten Bodenart, die sich von anderen Bodenarten durch eine Bodenmaterialzusammensetzung, insbesondere hinsichtlich ihrer physikalischen Eigenschaften, unterscheidet, oder einer bestimmten Betriebsart, die sich von anderen Betriebsarten beispielsweise hinsichtlich einer Arbeitsgeschwindigkeit oder eines Verschleißes unterscheidet, zugeordnet ist, und
**dass** eine Auswahleinrichtung vorgesehen ist, mit welcher die Vorgabe-Datensätze zum Betrieb der Baumaschine (10) auswählbar sind.

**2.** Baumaschine (10) nach Anspruch 1,
**dadurch gekennzeichnet,**
**dass** die Vorgabe-Datensätze über ein GUI selektiv von einem Maschinenbediener auswählbar sind und/oder neu erstellbar sind, wobei die Maschinenparameter eines jeweiligen ausgewählten Datensatzes von dem Maschinenbediener über das GUI veränderbar und speicherbar sind.

**3.** Baumaschine (10) nach Anspruch 1 oder 2,
**dadurch gekennzeichnet,**
**dass** eine Sequenz der Anwendung der Vorgabe-Datensätze vordefinierbar/vorgebbar oder vordefiniert/vorgegeben ist.

**4.** Baumaschine (10) nach Anspruch 3,
**dadurch gekennzeichnet,**
**dass** die Sequenz der Anwendung der Vorgabe-Datensätze über eine Tiefe des Bodenbearbeitungswerkzeugs (30) im Boden vordefinierbar/vorgebbar oder vordefiniert/vorgegeben ist.

**5.** Baumaschine (10) nach einem der Ansprüche 1 bis 4,
**dadurch gekennzeichnet,**
**dass** die Steuereinrichtung eingerichtet ist, um die Vorgabe der Sequenz der Anwendung der Vorgabe-Datensätze auf der Grundlage eines vorab erstellten Bodenprofils zu bestimmen.

**6.** Baumaschine (10) nach einem der Ansprüche 1 bis 5,
**dadurch gekennzeichnet,**
**dass** die Steuereinrichtung eingerichtet ist, um die Anwendung der Vorgabe-Datensätze durch eine Eingabe einer jeweiligen Schichtdicke der dem jeweiligen Vorgabe-Datensatz zugeordneten Bodenart vorzunehmen.

**7.** Baumaschine (10) nach einem der Ansprüche 1 bis 6,
**dadurch gekennzeichnet,**
**dass** die Steuereinrichtung eingerichtet ist, um die Anwendung der Vorgabe-Datensätze automatisch nach Maßgabe von Messdaten von Bearbeitungsparametern, insbesondere von einer Eindringtiefe des Bodenbearbeitungswerkzeugs (30) in den Boden und/oder von einem am Bodenbearbeitungswerkzeug (30) erfassten Kraftverlauf, vorzunehmen.

**8.** Baumaschine (10) nach einem der Ansprüche 1 bis 7,
**dadurch gekennzeichnet,**
**dass** das Bodenbearbeitungswerkzeug (30) ein Hydraulik- oder Seilgreifer (31), insbesondere ein Bohrgreifer, Schlitzwandgreifer oder Pfahlgreifer ist.

**9.** Baumaschine (10) nach einem der Ansprüche 1 bis 8,
**dadurch gekennzeichnet,**
**dass** die Vorgabe-Datensätze mindestens zwei Maschinenparameter ausgewählt aus den Folgenden umfassen: eine Fallhöhe des Bodenbearbeitungswerkzeugs (30), einen Schließzyklus von Greiferschalen (34), eine Schließkraft von Greiferschalen (34), eine Schließgeschwindigkeit von Greiferschalen (34), einen Füllgrad von Greiferschalen (34), eine Anzahl von Wiederholungen von Schließzyklen oder Fallvorgängen bei einem Greifer.

**10.** Verfahren zum Steuern einer Baumaschine (10), an der ein Bodenbearbeitungswerkzeug (30), insbesondere in der Form eines Hydraulik- oder Seilgreifers (31) angebracht ist, und die eine Betätigungseinrichtung für das an der Baumaschine (10) angebrachte Bodenbearbeitungswerkzeug (30) aufweist, mit der das Bodenbearbeitungswerkzeug (30) in einen zu bearbeitenden Boden eingebracht werden kann, mit:
Betreiben der Betätigungseinrichtung, indem diese durch Anwenden mehrerer Maschinenparameter bei der Betätigungseinrichtung gesteuert wird;
**dadurch gekennzeichnet,**
**dass** die Steuerung der Betätigungseinrichtung durch Auswahl und Anwendung eines Vorgabe-Datensatzes aus mehreren gespeicherten Vorgabe-Datensätzen erfolgt, die jeweils eine vorgegebene/vordefinierte Auswahl der Maschinenparameter der Betätigungseinrichtung für unterschiedliche definierte Bearbeitungsvorgänge enthalten, und
**dass** jeder der Vorgabe-Datensätze einer bestimmten Bodenart, die sich von anderen Bodenarten durch eine Bodenmaterialzusammensetzung, insbesondere hinsichtlich ihrer physikalischen Eigenschaften, unterscheidet, oder einer bestimmten Betriebsart, die sich von anderen Betriebsarten beispielsweise hinsichtlich einer Arbeitsgeschwindigkeit oder eines Verschleißes unterscheidet, zugeordnet ist.

**11.** Verfahren nach Anspruch 10,
**dadurch gekennzeichnet,**
**dass** die Auswahl des anzuwendenden Vorgabe-Datensatzes oder einer Sequenz von anzuwendenden Vorgabe-Datensätzen aus den gespeicherten Vorgabe-Datensätzen über ein GUI selektiv von einem Maschinenbediener vorgenommen wird und/oder neu erstellt wird oder automatisch auf der Grundlage eines vorab erstellten Bodenprofils vorgenommen wird oder automatisch nach Maßgabe von Messdaten von Bearbeitungsparametern, insbesondere von einer Eindringtiefe des Bodenbearbeitungswerkzeugs (30) in den Boden und/oder von einem am Bodenbearbeitungswerkzeug (30) erfassten Kraftverlauf, vorgenommen wird.

**12.** Verfahren nach einem der Ansprüche 10 oder 11,
**dadurch gekennzeichnet,**
**dass** die Anwendung der Vorgabe-Datensätze durch eine Eingabe einer jeweiligen Schichtdicke der dem jeweiligen Vorgabe-Datensatz zugeordneten Bodenart vorgenommen wird.

**13.** Verfahren nach einem der Ansprüche 10, 11 oder 12,
**dadurch gekennzeichnet,**
**dass** die Anwendung der Vorgabe-Datensätze automatisch nach Maßgabe von Messdaten von Bearbeitungsparametern, insbesondere von einer Eindringtiefe des Bodenbearbeitungswerkzeugs (30) in den Boden und/oder von einem am Bodenbearbeitungswerkzeug (30) erfassten Kraftverlauf vorgenommen wird.

**13.** Verfahren nach einem der Ansprüche 10 bis 12,
**dadurch gekennzeichnet,**
**dass** das Bodenbearbeitungswerkzeug (30) ein Hydraulik- oder Seilgreifer (31), insbesondere ein Bohrgreifer, Schlitzwandgreifer oder Pfahlgreifer.

**14.** Verfahren nach einem der Ansprüche 10 bis 13,
**dadurch gekennzeichnet,**
**dass** die Vorgabe-Datensätze mindestens zwei Maschinenparameter ausgewählt aus den Folgenden umfassen: eine Fallhöhe des Bodenbearbeitungswerkzeugs (30), einen Schließzyklus von Greiferschalen (34), eine Schließkraft von Greiferschalen (34), eine Schließgeschwindigkeit von Greiferschalen (34), einen Füllgrad von Greiferschalen (34), eine Anzahl von Wiederholungen von Schließzyklen oder Fallvorgängen bei einem Greifer.
